# EUROPÄISCHE PATENTANMELDUNG

(11) **EP 4 834 096 A1**
(43) Veröffentlichungstag der Anmeldung: **04.11.2026**
(21) Anmeldenummer: 26174135.9
(22) Anmeldetag: 23.04.2026
(51) Int. Cl.: A01G 17/06

(54) **RANKGERÜST**

(30) Priorität: 30.04.2025 DE 202025102378 U
(71) Anmelder: Hamann, Richard, 09577 Niederwiesa (DE)
(72) Erfinder: Hamann, Richard, 09577 Niederwiesa (DE)
(74) Vertreter: Steiniger, Carmen

(57) **Zusammenfassung**

Die vorliegende Erfindung betrifft ein Rankgerüst (1), das wenigstens ein Gerüstfeld (2,3) mit einem ersten Pfosten (4) und einem zu dem ersten Pfosten beabstandeten zweiten Pfosten (5) aufweist, wobei zwischen den Pfosten (4,5) Haltedrähte (12,12') oder andere Horizontalverbinder verlaufen. Erfindungsgemäß sind die Pfosten (4,5) als Z- oder N-Profile ausgebildet, wobei an parallel zueinander verlaufenden Profilschienen des ersten Pfostens (4) eine erste Schelle (8) montiert ist und an parallel zueinander verlaufenden Profilschienen (41) des zweiten Pfostens (5) eine zweite Schelle (8') montiert ist, an der ersten Schelle (8) eine zu dem zweiten Pfosten (5) ausgerichtete erste Profilklemme (9) verschwenkbar montiert ist, wobei ein erstes Ende eines als Z- oder N-Profil ausgebildeten Querverbinders (10) in die erste Profilklemme (9) eingeführt ist, und an der zweiten Schelle (8') eine zu dem ersten Pfosten (4) ausgerichtete zweite Profilklemme (9') verschwenkbar montiert ist, wobei ein zweites Ende des Querverbinders (10) in die zweite Profilklemme (9') eingeführt ist.

## Beschreibung

Die vorliegende Erfindung betrifft ein Rankgerüst, das wenigstens ein Gerüstfeld mit einem ersten Pfosten und einem zu dem ersten Pfosten beabstandeten zweiten Pfosten aufweist, wobei zwischen den Pfosten Haltedrähte oder andere Horizontalverbinder verlaufen.

Im Stand der Technik existieren unterschiedlichste Varianten von Rankgerüsten. Insbesondere für Hobbygärtner ist es von Vorteil, einen Bausatz für ein Rankgerüst kaufen zu können, in dem schon alle Gerüstbestandteile enthalten sind, wobei dann das Rankgerüst mit den gewünschten Eigenschaften schnell aufgebaut werden kann. Die am Markt erhältlichen Bausätze für Rankgerüste haben fixe Maße, insbesondere im Hinblick auf die Breite der zwischen den Pfosten befindlichen Pflanzfelder, mit welchen sich der Kunde abfinden muss. So weist beispielsweise der in der Druckschrift EP 0 386 402 A1 beschriebene Bausatz für ein Rankgerüst Gerüstfelder in Form von bereits vorgefertigten Halbgittern mit bestimmten Breiten auf, wobei beim Aufbau des Rankgerüstes freie Drahtenden dieser Halbgitter mittels stangenförmiger Kupplungsglieder verbunden werden.

Aus der Druckschrift EP 1 928 224 B1 ist ein Rankgerüst für Wein bekannt, das hinsichtlich der Breite der Pflanzfelder relativ variabel ist. Das Rankgerüst weist mehrere in einer Reihe angeordnete und in einem Boden verankerte Pfosten auf, vor und hinter welchen jeweils ein Haltedraht verläuft. Die Pfosten weisen einen C-förmigen Querschnitt auf. Dadurch haben die Pfosten einen von oben nach unten verlaufenden Längsschlitz, in dem sich jeweils eine Gleitvorrichtung befindet. An einer Vorderseite der Gleitvorrichtung befindet sich jeweils eine Drahthalterung, die die Form eines auf den Kopf gestellten U's aufweist. In den beiden Enden der Drahthalterungen sind jeweils Löcher ausgebildet, durch welche jeweils die Haltedrähte geführt sind. An einer Oberseite der Gleitvorrichtung ist eine obere Riemenscheibenanordnung angeordnet. Die Unterseite der Gleitvorrichtung ist mit einer Feder verbunden, die mit einer unteren Riemenscheibenanordnung verbunden ist. Über die Riemenscheibenanordnungen verläuft ein von einer Winde ausgehender Riemenscheibendraht unter Ausbildung einer Flaschenzuganordnung. Mittels dieser Flaschenzuganordnung kann die Höhe der Drahthalterung und damit die Höhe der Haltedrähte an die Größe einer Pflanze angepasst werden. Dabei sind die in jedem Pfosten vorgesehenen Riemenscheibendrähte mit einem unten die Pfosten verbindenden Synchronisationsdraht verbunden, sodass die jeweiligen Flaschenzuganordnungen gleichzeitig betätigt werden können. Zwischen den Haltedrähten und dem Synchronisationsdraht verläuft ein Sperrdraht, an dem der jeweilige Weinstock befestigt wird, während die Triebe an den Haltedrähten befestigt werden. Der Sperrdraht wird an Haken gehalten, die an den Pfosten vorgesehen sind.

Das aus der Druckschrift EP 1 928 224 B1 besitzt den Nachteil, dass es nur eine geringe Steifigkeit besitzt.

Es ist daher die Aufgabe der vorliegenden Erfindung, ein einfach aufbaubares Rankgerüst zur Verfügung zu stellen, das hinsichtlich der Abmessungen seiner Pflanzfelder eine hohe Variabilität aufweist und dennoch hochstabil ist.

Diese Aufgabe wird durch ein Rankgerüst, das wenigstens ein Gerüstfeld mit einem ersten Pfosten und einem zu dem ersten Pfosten beabstandeten zweiten Pfosten aufweist, wobei zwischen den Pfosten Haltedrähte oder andere Horizontalverbinder verlaufen, gelöst, wobei die Pfosten als Z- oder N-Profile ausgebildet sind, wobei an parallel zueinander verlaufenden Profilschienen des ersten Pfostens eine erste Schelle montiert ist und an parallel zueinander verlaufenden Profilschienen des zweiten Pfostens eine zweite Schelle montiert ist, an der ersten Schelle eine zu dem zweiten Pfosten ausgerichtete erste Profilklemme verschwenkbar montiert ist, wobei ein erstes Ende eines als Z- oder N-Profil ausgebildeten Querverbinders in die erste Profilklemme eingeführt ist, und an der zweiten Schelle eine zu dem ersten Pfosten ausgerichtete zweite Profilklemme verschwenkbar montiert ist, wobei ein zweites Ende des Querverbinders in die zweite Profilklemme eingeführt ist.

Bei dem erfindungsgemäßen Rankgerüst können die Pfosten in für den jeweiligen Nutzer geeigneten Abständen in einen Boden eingebracht werden. Durch diese Abstände wird durch den Nutzer eine Breite des auszubildenden Pflanzfeldes bestimmt. Dabei können die Pfosten so tief in dem Boden verankert werden, dass die Pfosten stabil stehen.

Mittels der Schellen und der daran montierten Profilklemmen kann zwischen benachbarten Pfosten jeweils wenigstens ein das Rankgerüst stabilisierender Querverbinder montiert werden. Die Profilklemmen halten zwar den jeweiligen Querverbinder, klemmen ihn jedoch nicht derart fest, dass er allein durch die jeweilige Profilklemme gehalten wird. Da die Querverbinder in die Profilklemmen gesteckt werden, kann man die Profilklemmen auch als Profilstecker bezeichnen.

Dabei können die Schellen an benachbarten Pfosten in unterschiedlichen oder in gleichen Höhen vorgesehen sein, sodass der jeweilige Querverbinder schräg oder waagerecht ausgerichtet werden kann.

Durch die Verschwenkbarkeit der Profilklemmen können diese so in Richtung des jeweils benachbarten Pfostens ausgerichtet werden, dass der Querverbinder mit seinen beiden Enden geeignet in die jeweils zu verbindenden Profilklemmen eingeführt werden kann. Dabei kann der Querverbinder aufgrund seiner Ausbildung als Z- oder N-Profil einfach in die den beiden Enden des Querverbinders jeweils gegenüberliegenden Profilklemmen gesteckt werden. Durch die beiden parallelen und in entgegengesetzte Richtungen ausgerichteten Profilschienen des Querverbinders wird er in den beiden Profilklemmen sicher gehalten.

Da die Höhe der jeweiligen Schellen variabel an den Pfosten eingestellt werden kann, können diese in solchen Höhen fixiert werden, dass der jeweilige Querverbinder zwischen die Profilklemmen passt. Das heißt, in Abhängigkeit von dem gewählten Abstand zwischen den Pfosten wird sich der Winkel, in dem sich der Querverbinder zwischen Pfosten erstreckt, ändern. Unabhängig davon ergibt sich in jedem Fall durch den Querverbinder eine hohe Stabilität des Rankgerüstes.

Anstelle der Haltedrähte können bei dem erfindungsgemäßen Rankgerüst andere Horizontalverbinder, wie beispielsweise Schnüre, Stäbe, Leisten oder Profile, eingesetzt werden.

Das erfindungsgemäße Rankgerüst besitzt den Vorteil, dass es mit wenigen Handgriffen aufgebaut ist.

Insofern das erfindungsgemäße Rankgerüst wenigstens zwei in Reihe angeordnete Gerüstfelder und damit wenigstens drei Pfosten aufweist, ist es von Vorteil, wenn die an dem zweiten Pfosten montierte zweite Schelle in einer sich von der ersten Höhe der an dem ersten Pfosten montierten ersten Schelle unterscheidenden zweiten Höhe montiert ist.

Wenn das erfindungsgemäße Rankgerüst genau zwei nebeneinander angeordnete Gerüstfelder aufweist, hat es sich als praktisch erwiesen, wenn der erste Pfosten einen mittleren Pfosten ausbildet und an der an dem ersten Pfosten montierten ersten Schelle zwei in unterschiedliche Richtungen, also in Richtung auf die jeweils dem ersten Pfosten zu beiden Seiten benachbarten Pfosten ausgerichtete Profilklemmen montiert sind.

In einer bevorzugten Ausführungsform des erfindungsgemäßen Rankgerüstes an einer Außenseite wenigstens einer der parallel zueinander verlaufenden Profilschienen des ersten Pfostens wenigstens ein erster Haken angeordnet ist, an dem jeweils ein erstes Ende eines ersten Drahtes befestigt ist, an einer Außenseite wenigstens einer der parallel zueinander verlaufenden Profilschienen des zweiten Pfostens wenigstens ein zweiter Haken angeordnet ist, an dem jeweils erstes Ende eines zweiten Haltedrahtes befestigt ist, und ein zweites Ende des ersten Haltedrahtes mit einem zweiten Ende des zweiten Haltedrahtes durch einen Drahtspanner verbunden ist.

Durch den Drahtspanner werden der erste und der zweite Haltedraht straff gespannt und können bei Bedarf jederzeit nachgespannt werden. Dabei wird durch die Höhe der Haken die Höhe der jeweiligen in Längsrichtung des Rankgerüstes verlaufenden Drahtbahn bestimmt. Vorzugsweise sind hierfür an den Pfosten jeweils mehrere in der Höhe voneinander beabstandete Haken ausgebildet. Somit könne durch einen Anwender des erfindungsgemäßen Rankgerüstes die Höhen der Haltedrähte selbst gewählt, erweitert oder weggelassen werden, was das Rankgerüst noch universeller macht.

Dabei hat es sich als günstig erwiesen, wenn der erste Haltedraht und der zweite Haltedraht für ihre Befestigung an dem jeweiligen Pfosten und gegebenenfalls an dem Drahtspanner jeweils mit sich selbst verdrillt sind.

Bei dieser Ausführungsform der Erfindung wird der jeweilige Draht in einen der an dem Pfosten vorgesehenen Haken eingelegt und mit einem Drahtlängenüberschuss um den jeweiligen Pfosten gewunden. Der jeweilige Drahtlängenüberschuss wird dann mehrfach um den in Längsrichtung zwischen den Pfosten verlaufenden Drahtabschnitt des Drahtes gewickelt. Dadurch hält der Draht fest an dem Pfosten, ohne dass es zusätzlicher Hilfsmittel bedarf.

In einer Standardversion des erfindungsgemäßen Rankgerüstes weist dieses wenigstens zwei Gerüstfelder auf, wobei die in einem ersten der Gerüstfelder und in einem letzten der Gerüstfelder montierten Querverbinder in zueinander entgegengesetzter Schrägausrichtung montiert sind.

Weitere Ausführungsformen des erfindungsgemäßen Rankgerüstes können auch mehr als zwei Gerüstfelder aufweisen. Dann ist vorzugsweise zwischen dem ersten und dem letzten der Gerüstfelder wenigstens ein weiteres Gerüstfeld mit zwischen den Pfosten verlaufenden Drähten, ohne Querverbinder, aber mit zusätzlicher Profilklemme angeordnet.

Es ist ferner bei dem erfindungsgemäßen Rankgerüst möglich, dessen Gerüstfelder über Eck zu montieren.

Eine bevorzugte Ausführungsform des erfindungsgemäßen Rankgerüstes wird im Folgenden anhand von Figuren näher erläutert, wobei die Figuren 1 bis 13 verschiedene Stadien des Aufbaus eines exemplarisch dargestellten Rankgerüstes 1 mit zwei Gerüstfeldern 2, 3 zeigen. Figur 14 zeigt eine Ausführungsform des erfindungsgemäßen Rankgerüstes 1 mit drei Gerüstfeldern 2, 20, 3. Figur 15 zeigt eine Ausführungsform des erfindungsgemäßen Rankgerüstes 1 mit einem Gerüstfeld 2. Figur 16 zeigt eine Ausführungsform des erfindungsgemäßen Rankgerüstes 1 mit zwei über Eck angeordneten zweiteiligen Gerüstfeldern 2, 3, 3', 2'. Figur 17 zeigt eine Ausführungsform des erfindungsgemäßen Rankgerüstes 1 mit zwei über Eck angeordneten einteiligen Gerüstfeldern 2, 2'.

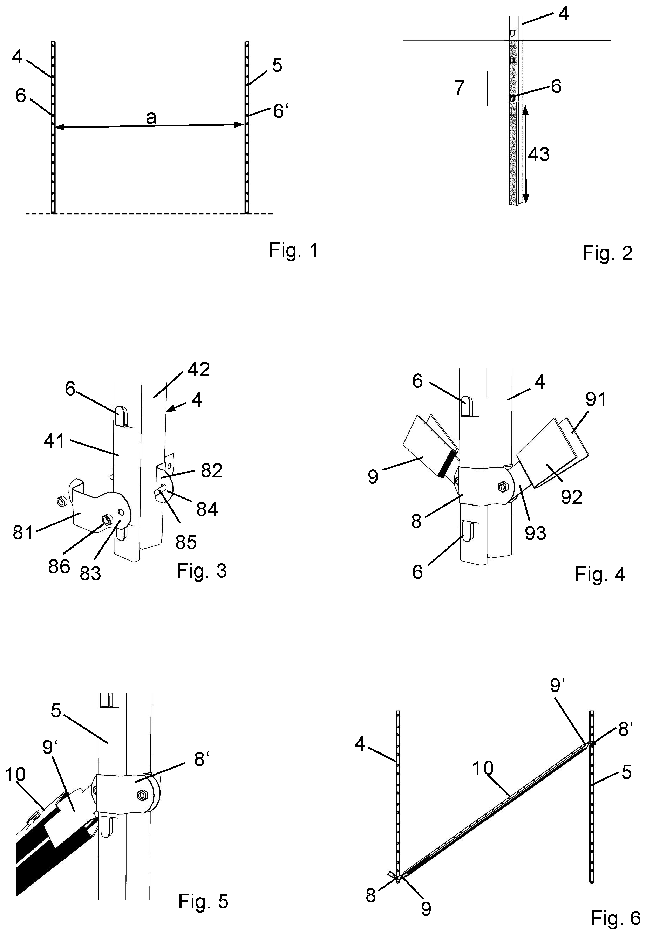

Figur 1 zeigt schematisch in einer Seitenansicht in einem Abstand a zueinander aufgestellte Pfosten 4, 5. Beispielsweise beträgt der Abstand a 2 m. Jeder der Pfosten 4, 5 ist als ein Z-Profil ausgebildet. Alternativ können die Pfosten 4, 5 als N-Profile ausgebildet sein. Damit weist jeder der Pfosten 4, 5 zwei durch eine schräg verlaufende Zwischenschiene 42 voneinander beabstandete, parallel zueinander verlaufende Profilschienen 41 auf.

Ferner weist jeder der Pfosten 4, 5 jeweils an mindestens einer seiner Außenseiten der Profilschienen 41 mehrere Haken 6, 6' auf, die voneinander beabstandet in unterschiedlichen Höhen angeordnet sind. Die Haken 6, 6' können in unterschiedlichen Ausrichtungen geöffnet sein.

Wie es in Figur 2 schematisch zu sehen ist, sind die Pfosten 4, 5 jeweils in einem Boden 7 verankert. Ein jeweils im Boden 7 verankerter Endbereich 43 des jeweiligen Pfostens 4, 5 ist vorzugsweise hakenlos ausgebildet. Beispielsweise ist der jeweilige Pfosten 4, 5 mit einem Vorschlaghammer und einer Einschlaghilfe 50 cm in den Boden 7 eingeschlagen. Die Pfosten 4, 5 können jedoch alternativ auch an ihren unteren Enden in den Boden 7 einbetoniert sein oder in Bodenhülsen, die in dem Boden 7 eingebracht sind, eingesteckt sein.

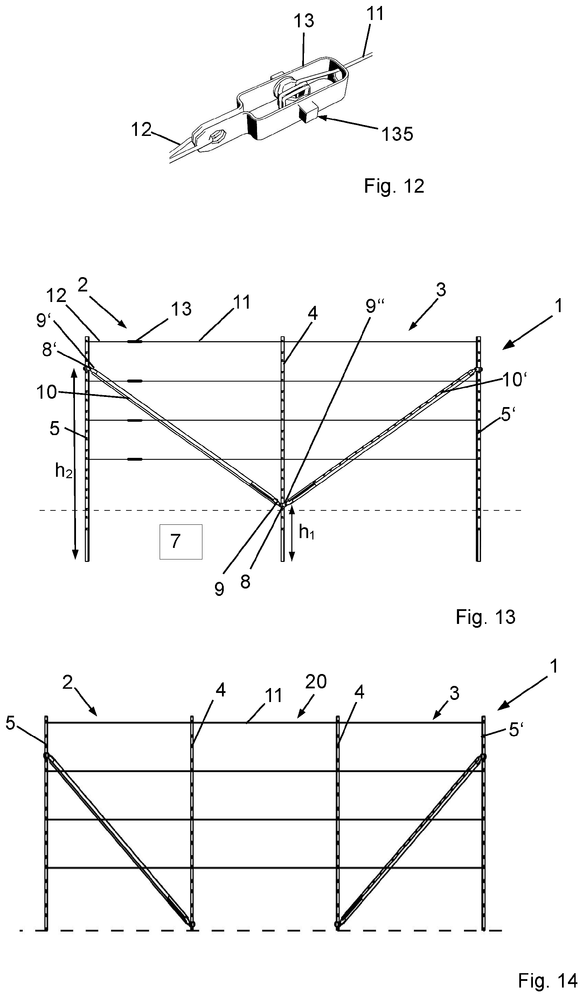

Danach wird, wie es schematisch in Figur 3 gezeigt ist, an den Pfosten 4, 5 jeweils eine Schelle 8, 8' befestigt. Wie es schematisch in Figur 13 zu sehen ist, befindet sich dabei eine an dem ersten Pfosten 4 befestigte erste Schelle 8 in einer anderen Höhe h₁ als eine an dem zweiten Pfosten 5 befestigte zweite Schelle 8'. Die jeweilige Schelle 8, 8' weist jeweils zwei Schellenteile 81, 82 auf, die jeweils an die Profilschienen 41 des Pfostens 4, 5 angelegt und an ihren jeweils beidseitig auskragenden, einander gegenüberliegenden Schellenflächen 83, 84 mittels Schrauben 85 und Muttern 86 derart miteinander verbunden werden bzw. sind, dass die Schelle 8, 8' den Pfosten 4, 5 umschließt.

Wie es in Figur 4 zu sehen ist, wird bzw. ist zwischen die Schellenflächen 83, 44 an wenigstens einer Seite der jeweiligen Schelle 8, 8' ein Verbindungsstück 93 einer Profilklemme 9, 9' geschraubt. Die jeweilige Profilklemme 9, 9' weist zwei, ausgehend von dem Verbindungsstück 93 auseinandergespreizte Klemmenarme 91, 92 auf. Die Klemmenarme 91, 92 ragen jeweils in Richtung des jeweils benachbarten Pfostens 4, 5.

Die jeweilige Profilklemme9, 9' kann an der Schelle 8, 8' verschwenkt werden und dadurch in Richtung eines Endes eines Querverbinders 10, 10' ausgerichtet werden.

In die jeweilige Profilklemme 9, 9' wird jeweils ein Ende des als Z-Profil ausgebildeten Querverbinders 10, 10' geklemmt. Dies ist in Figur 5 zu sehen. Dabei wird jeweils die Zwischenschiene 42 des jeweiligen Z-Profils zwischen den Klemmenarmen 91, 92 aufgenommen. Die Profilschienen des jeweiligen Querbinders 10, 10' überdecken jeweils den seitlichen Öffnungsbereich der jeweiligen Profilklemme 9, 9'.

Im Ergebnis entsteht die in Figur 6 schematisch gezeigte Konstruktion, bei der die Pfosten 4, 5 durch den Querverbinder 10 bzw. 10' querverbunden sind.

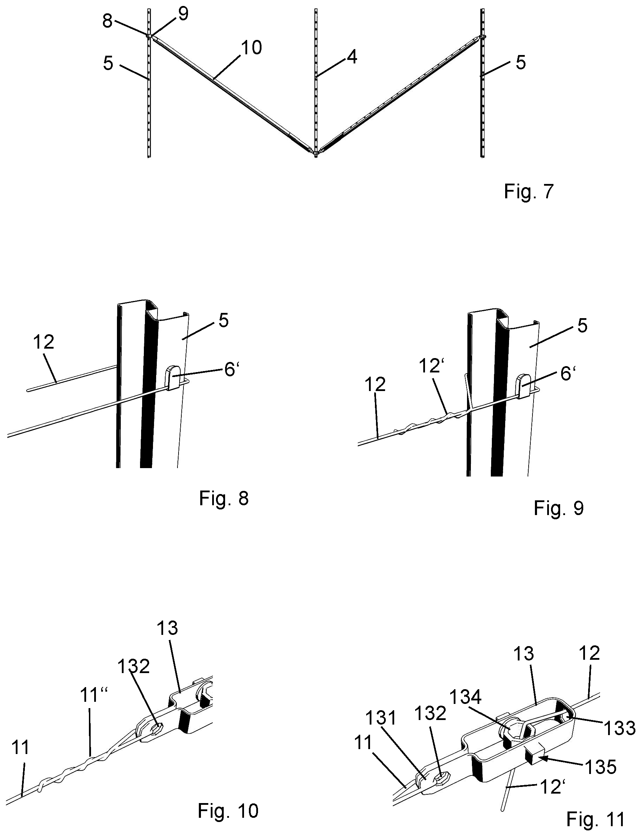

Um ein Rankgerüst 1 mit zwei Gerüstfeldern 2, 3 aufzubauen, wird dann die oben beschriebene Vorgehensweise auf der anderen Seite des zweiten Pfostens 5 wiederholt, wodurch die in Figur 7 schematisch gezeigte Konstruktion entsteht.

Figur 8 zeigt schematisch, wie der Pfosten 5 von einem zweiten Haltedraht 12 umschlungen wird bzw. ist. Dabei ist der zweite Haltedraht 12 in den an dem Pfosten 5 ausgebildeten Haken 6' eingelegt.

Figur 9 zeigt schematisch, wie der zweite Haltedraht 12 an dem zweiten Pfosten 5 befestigt wird bzw. ist. Hierfür wird bzw. ist ein erstes Ende des Haltedrahtes 12, das um den Pfosten herum gewunden ist, mehrfach, beispielsweise mit fünf bis acht Umdrehungen, um einen von dem Pfosten 5 abführenden Drahtabschnitt des zweiten Haltedrahtes 12 gewunden, d. h. mit sich selbst verdrillt. Auf gleiche Weise wird an dem ersten Pfosten 4 auf gleicher Höhe wie an dem zweiten Pfosten 5 ein erster Haltedraht 11 befestigt.

Die beiden zweiten Enden der Haltedrähte 11, 12 werden dann, wie es schematisch in den Figuren 10 und 11 dargestellt ist, einem Drahtspanner 13 zugeführt. Dabei wird ein zweites Ende 11' des ersten Haltedrahtes 11 durch eine in einem Haltearm 131 des Drahtspanners 13 ausgebildete Querbohrung 132 geführt, wobei der erste Haltedraht 11 dann mit sich selbst verdrillt wird.

Ein zweites Ende 12' des zweiten Haltedrahtes 12 wird zunächst durch eine Längsbohrung 133 des Drahtspanners 13 und dann durch eine Durchgangsmutter 134 des Drahtspanners 13 geführt. Die Durchgangsmutter 134 ist Bestandteil eines von außen verdrehbaren Spanngewindes 135. Wie es schematisch in Figur 12 gezeigt ist, wird durch Verdrehen des Spanngewindes 135 das zweite Ende 12' des zweiten Haltedrahtes 12 um die Durchgangsmutter 134 gewunden. Dabei werden gleichzeitig beiden Haltedrähte 11, 12 gespannt. Das Verdrehen kann beispielsweise mit Hilfe eines Maulschlüssels erfolgen.

Auf diese Weise können zwischen Pfosten 4, 5 in verschiedenen Höhen Haltedrähte 11, 12 montiert werden. Ein fertiges, zwei Gerüstfelder 2, 3 aufweisendes Rankgerüst 1 ist in Figur 13 zu sehen.

Bei dem in Figur 13 gezeigten Rankgerüst 1, das in der gezeigten Ausführungsform als Zwei-Feld-Rankgerüst ausgebildet ist, sind an der an dem ersten Pfosten 4 montierten Schelle 8 zwei Profilklemmen 9, 9" montiert. Dabei ist die Profilklemme 9 in Richtung des auf einer ersten Seite des ersten Pfostens 4 befindlichen zweiten Pfostens 5 ausgerichtet, während die Profilklemme 9" in Richtung des auf der anderen, zweiten Seite des ersten Pfostens 4 befindlichen Pfostens 5' ausgerichtet ist.

Das erfindungsgemäße Rankgerüst kann, wie es schematisch in Figur 14 gezeigt ist, um noch wenigstens ein weiteres, zwischen den Gerüstfeldern 2, 3 angeordnetes Gerüstfeld 20 erweitert werden. Dieses weitere Gerüstfeld 20 weist dann keine Querverbinder 10, 10', aber zwischen Pfosten 4, 4 gespannte Haltedrähte 11, 12 auf.

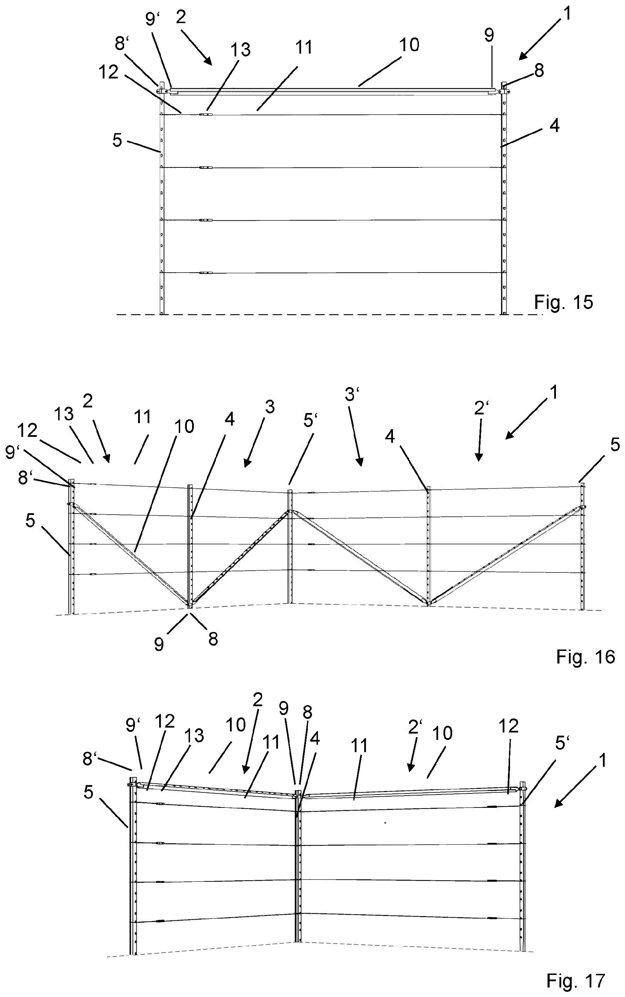

In der in Figur 15 dargestellten Variante des Rankgerüstes 1, das in der gezeigten Ausführungsform als ein Ein-Feld-Rankgerüst ausgebildet ist, ist der Querverbinder 10 waagerecht zwischen den beiden Pfosten 4, 5 angeordnet. In der gezeigten Ausführungsform verbindet der Querverbinder 10 die beiden oberen Enden der Pfosten 4, 5. Dabei wird der Querverbinder 10 an dem Pfosten 4 durch die an der ersten Schelle 8 befestigte erste Profilklemme 9 gehalten, während er an dem Pfosten 5 durch die an der zweiten Schelle 8' befestigte zweite Profilklemme 9' gehalten wird.

Die in Figur 16 gezeigte Eck-Variante des Rankgerüstes 1 setzt sich aus zwei über Eck angeordneten Zwei-Feld-Rankgerüsten zusammen, die jeweils wie in Figur 13 ausgebildet sind, worauf hiermit Bezug genommen wird.

Die in Figur 17 gezeigte Eck-Variante des Rankgerüstes 1 setzt sich aus zwei über Eck angeordneten Ein-Feld-Rankgerüsten zusammen, die jeweils wie in Figur 15 gezeigt ausgebildet sind, worauf hiermit Bezug genommen wird.

## Patentansprüche

1. Rankgerüst (1), das wenigstens ein Gerüstfeld (2, 3, 2', 3') mit einem ersten Pfosten (4) und einem zu dem ersten Pfosten (4) beabstandeten zweiten Pfosten (5) aufweist, wobei zwischen den Pfosten (4, 5) Haltedrähte (11, 12) oder andere Horizontalverbinder verlaufen, **dadurch gekennzeichnet, dass** die Pfosten (4, 5) als Z- oder N-Profile ausgebildet sind, wobei an parallel zueinander verlaufenden Profilschienen (41) des ersten Pfostens (4) eine erste Schelle (8) in einer ersten Höhe (h₁) montiert ist und an parallel zueinander verlaufenden Profilschienen (41) des zweiten Pfostens (5) eine zweite Schelle (8') montiert ist, an der ersten Schelle (8) eine zu dem zweiten Pfosten (5) ausgerichtete erste Profilklemme (9) verschwenkbar montiert ist, wobei ein erstes Ende eines als Z- oder N-Profil ausgebildeten Querverbinders (10, 10') in die erste Profilklemme (9) eingeführt ist, und an der zweiten Schelle (8') eine zu dem ersten Pfosten (4) ausgerichtete zweite Profilklemme (9') verschwenkbar montiert ist, wobei ein zweites Ende des Querverbinders (10, 10') in die zweite Profilklemme (9') eingeführt ist.

2. Rankgerüst nach Anspruch 1, **dadurch gekennzeichnet, dass** die an dem zweiten Pfosten (5) montierte zweite Schelle (8') in einer sich von der ersten Höhe (h₁) der an dem ersten Pfosten (4) montierten ersten Schelle (8) unterscheidenden zweiten Höhe (h₂) montiert ist.

3. Rankgerüst nach Anspruch 2, **dadurch gekennzeichnet, dass** an der an dem ersten Pfosten (4) montierten ersten Schelle (8) zwei in unterschiedliche Richtungen ausgerichtete Profilklemmen (9, 9") montiert sind.

4. Rankgerüst nach einem der vorhergehenden Ansprüche, **dadurch gekennzeichnet, dass** an einer Außenseite wenigstens einer der parallel zueinander verlaufenden Profilschienen (41) des ersten Pfostens (4) wenigstens ein erster Haken (6) angeordnet ist, an dem jeweils ein erstes Ende eines ersten Haltedrahtes (11) befestigt ist, an einer Außenseite wenigstens einer der parallel zueinander verlaufenden Profilschienen (41) des zweiten Pfostens (5) wenigstens ein zweiter Haken (6') angeordnet ist, an dem jeweils erstes Ende eines zweiten Haltedrahtes (12) befestigt ist, und ein zweites Ende des ersten Haltedrahtes (11) mit einem zweiten Ende des zweiten Haltedrahtes (12) durch einen Drahtspanner (13) verbunden ist.

5. Rankgerüst nach einem der vorhergehenden Ansprüche, **dadurch gekennzeichnet, dass** der erste Haltedraht (11) und der zweite Haltedraht (12) für ihre Befestigung an dem jeweiligen Pfosten (4, 5) und gegebenenfalls an dem Drahtspanner (13) jeweils mit sich selbst verdrillt sind.

6. Rankgerüst nach einem der vorhergehenden Ansprüche, **dadurch gekennzeichnet, dass** das Rankgerüst (1) wenigstens zwei Gerüstfelder (2, 3) aufweist, wobei die in einem ersten der Gerüstfelder (2) und in einem letzten der Gerüstfelder (3) montierten Querverbinder (10, 10') in zueinander entgegengesetzter Schrägausrichtung montiert sind.

7. Rankgerüst nach Anspruch 6, **dadurch gekennzeichnet, dass** zwischen dem ersten der Gerüstfelder (2) und dem letzten der Gerüstfelder (3) wenigstens ein weiteres Gerüstfeld (20) mit jeweils zwischen zwei der Pfosten (4, 4) verlaufenden Haltedrähten (11, 12), aber ohne Querverbinder (10, 10') angeordnet ist.

8. Rankgerüst nach einem der vorhergehenden Ansprüche, **dadurch gekennzeichnet, dass** wenigstens zwei der Gerüstfelder (2, 2'; 3, 3') über Eck montiert sind.
